# EUROPEAN PATENT SPECIFICATION

(11) **EP 3 566 955 B1**
(45) Date of publication and mention of the grant of the patent: **31.05.2023**
(21) Application number: 19172703.1
(22) Date of filing: 06.05.2019
(51) Int. Cl.: B65B 3/18, B65B 7/02, B65B 25/00, B65B 51/14, B29C 65/00, B29C 65/18, B29L 31/00

(54) **PROCESS AND APPARATUS FOR MAKING A PACKAGE FOR CONTAINING A LIQUID OR SEMI-LIQUID PRODUCT**
VERFAHREN UND VORRICHTUNG ZUR HERSTELLUNG EINER VERPACKUNG FÜR EIN FLÜSSIGES ODER HALBFLÜSSIGES PRODUKT
PROCÉDÉ ET APPAREIL DE FABRICATION D'UN EMBALLAGE POUR CONTENIR UN PRODUIT LIQUIDE OU SEMI-LIQUIDE

(30) Priority: 09.05.2018 IT 201800005181
(43) Date of publication of application: 13.11.2019
(73) Proprietor: I.M.A. INDUSTRIA MACCHINE AUTOMATICHE S.p.A., 40064 Ozzano dell' Emilia (BO) (IT)
(72) Inventor: BATTAGLIA, Massimo, 40128 BOLOGNA (IT)
(74) Representative: Milli, Simone

(56) References cited:
- EP-A1- 1 733 968
- EP-A1- 2 147 605
- EP-B1- 2 147 605
- WO-A1-2017/053418
- US-A- 2 928 216
- US-A- 4 905 450
- US-A- 4 926 613
- US-A1- 2006 249 887

## Description

This invention relates to a process and an apparatus for making a package for containing a product.

In particular, said product is in the form of a liquid or semi-liquid product, especially in the form of a food product, preferably defined by melted cheese, make up for adaptations or the like.

Processes and apparatuses are known in the prior art for making a package for containing a product in the form of a processed cheese or the like, wherein the package comprises a container or wrapper, in particular formed by a corresponding layer for wrapping the product in plastic film or in layered film, which defines a respective inner chamber for housing said product.

In the prior art processes and apparatuses, the product is introduced in said chamber for housing the container through a respective filling passage, which emerges in said housing chamber, and said container is closed in a hermetically sealed fashion, following the introduction of said product in the inner housing chamber.

In the packages obtained with the prior art processes and apparatuses, there is, however, a problem relative to the presence of unwanted air inside the closed package. An example of such a process and apparatus can be found in prior art document US 4 905 450 A.

This excess air has the drawback of accelerating the process of deterioration of the food product and gives the pack in its entirety a not very desirable configuration, especially for the final consumers of this type of product.

Moreover, the need is felt in the sector to provide a process and an apparatus which operates in a particularly effective manner.

In addition, the need is felt in the sector to provide a process and an apparatus which operates in a particularly fast manner.

Also, the need is felt in the sector to provide a process and an apparatus which allow a reduction in the number of components which are used.

Additionally, the need is felt in the sector to provide a process and an apparatus which are easy to use.

Moreover, the need is felt in the sector to provide a process and an apparatus which are particularly reliable to use.

Further, the need is felt in the sector to provide a process and an apparatus which allow products of high quality to be obtained.

Also, the need is felt in the sector to provide a process and an apparatus which allow products of high durability to be obtained.

In addition, the need is felt in the sector to provide a process and an apparatus which have a reduced construction cost.

The present invention therefore proposes a new and/or alternative solution to the solutions known up to now and, more specifically, proposes to overcome one or more of the above mentioned drawbacks or problems and/or to meet one or more of the needs felt in the trade or inferable from the above.

The invention accordingly provides a process according to the accompanying claim 1 and an apparatus for implementing said process according to claim 12.

In this way, it is possible to eliminate the excess air efficiently and easily. These and other innovative aspects of the invention, or specific advantageous features, are set out in the appended claims and its technical features and advantages are apparent from the detailed description which follows of a preferred, advantageous embodiment of it, which must be considered purely as a non-limiting example; said description being made with reference to the accompanying drawings, in which:
- Figure 1 illustrates a schematic perspective view of a first preferred embodiment of the process and the apparatus according to the invention;
- Figure 2 illustrates a schematic perspective view of a preferred embodiment of a joining or sealing element used in the first preferred embodiment of the process and the apparatus according to the invention;
- Figure 3 illustrates a schematic perspective view of a second preferred embodiment of the process and the apparatus according to the invention;
- Figures 4 to 7 illustrate schematic front views of a further embodiment of the process according to the invention;
- Figures 8 to 11 illustrate schematic front views of a further embodiment of the process according to the invention.

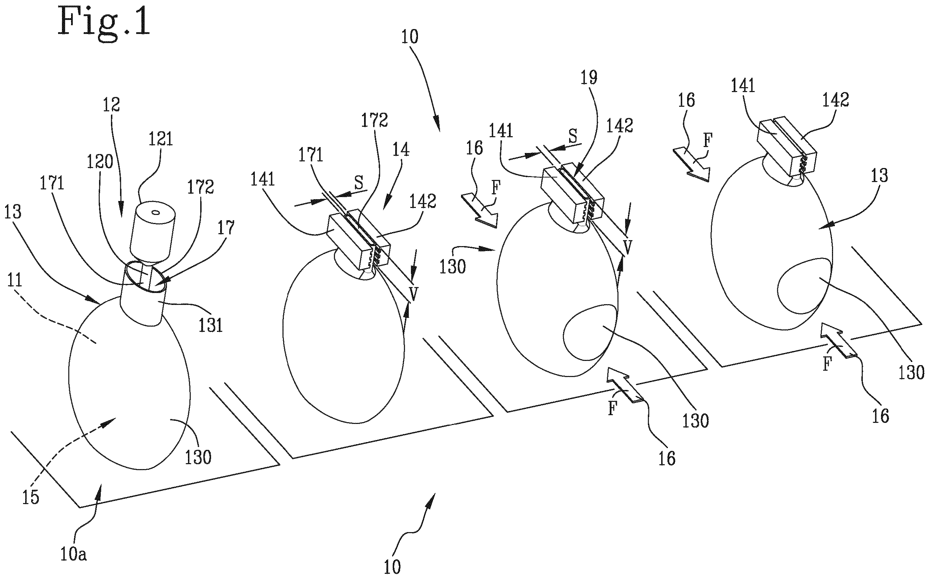

Figure 1 illustrates an embodiment of apparatus for obtaining a process for making a package for containing a liquid or semi-liquid product 11, in the form of a food product, defined by processed cheese, yoghurt or the like.

The package described in the invention comprises a container 13, formed by a corresponding layer for wrapping the product made from a plastic or layered film.

The container is in the form of a body 13 defining an inner chamber 15 for housing the product 11, having a passage opening 17 which places in communication the chamber 15 with the environment outside the container 13.

The passage opening 17 is defined by a protruding portion 131 of the container 13.

The packaging process comprises the following steps:
- introducing the product in the housing chamber 15 of the container 13 through the (filling) passage opening 17 which emerges in the housing chamber 15;
- partly closing the filling opening 17 in such a way as to make at least one passage 19 for discharging the excess air present in the housing chamber 15;
- applying a pressure on the housing chamber 15 for discharging the excess air present in the housing chamber 15 through the passage 19 for discharging the excess air; and
- sealing, in particular in a hermetically sealed fashion, the passage 19 for discharging the excess air.

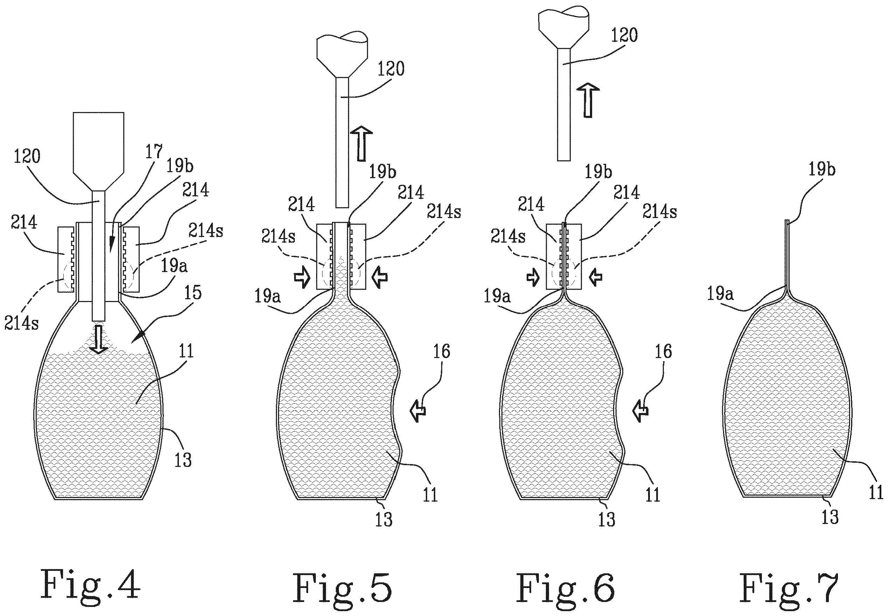

As illustrated (in particular also in Figures 4 to 11), during the step of applying a pressure on the housing chamber 15, the product 11 is forced to occupy a first stretch 19a of the passage 19 for discharging the air, proximal to the housing chamber 15, after the complete discharge of the excess air from the housing chamber 15, whilst a second stretch 19b of the passage 19, positioned contiguous with the first stretch 19a and distal from the housing chamber 15, without being occupied by the product 11 during the application of the pressure on the housing chamber 15.

Again as illustrated, the sealing step is performed with sealing means 141, 142; 149 which act in an area astride the first and second stretches in such a way as to affect both the first stretch 19a and the second stretch 19b for the permanent sealing of the passage 19.

It should be noted that, thanks to the difference of the viscosity characteristics between the air and the fluid or semi-fluid which constitutes the product 11 there is, therefore, also a difference between the respective passage speeds: that of the product 11 being typically less than 10,000 times the speed of passing through the passage 19 by the excess air. The slowing down due to the geometry of the passage 19 makes available a sufficiently long time, typically equal to 0.10 seconds, to perform the subsequent operations, since the step of discharging the excess air is clearly different in terms of time from that of any unwanted discharge of product 11.

In addition to this, the possibility of separating the stretches of the passage 19 into two distinct stretches 19a and 19b in the closing step makes it possible to obtain, during sealing, a perfectly sealed stretch 19b without the presence of product rising in the opening 17.

The filling opening 17 is formed in the wrapper in order to allow the introduction of the product 11 in the chamber 15 for housing the product in the same wrapper.

Preferably, as may be inferred from the drawings, the passage 19 for discharging the excess air has dimensions of the transversal cross section which are less than the dimensions of the transversal cross section of the opening 17 for introducing said product 11.

Advantageously, according to the process, the passage 19 for discharging air is made by reducing the cross section, that is to say, at least one dimension, of the opening 17 for introducing the product.

Advantageously, according to the process, the passage 19 for discharging air is provided by moving together the opposite faces 171, 172 of the opening 17 for introducing the liquid in the housing chamber 15.

As mentioned, the closing of the passage for introducing the product is performed using corresponding joining means, in particular in the form of means 14 for joining or sealing (also indicated with 141, 142 and 149), opposite faces 171, 172 of the opening passage for introducing the product in the container 15.

Preferably, according to the process, the moving together of the opposite faces 171, 172 of the opening 17 is performed by means of the means 14 for sealing opposite faces 171, 172 of the opening 17 for introducing the product in the housing 15 of the container.

Preferably, according to the process, in order to define the passage 19 for discharging the excess air, the moving together of the opposite faces 171, 172 of the opening 17 for introducing the product in the container 15 is performed at a distance S preferably equal, or substantially close, to 0.5 mm.

Preferably, the step of applying a pressure on the housing chamber 15 comprises the step of applying a thrust or compression on at least a portion of the housing chamber 15 in a zone in which the product 11 is located.

In light of this, the housing chamber 15 is made at least partly of a deformable material.

It should be noted that the viscosity of the product 11 is at least 50 times, preferably 400 times, the viscosity of the excess air.

Preferably, the passage 19 has a length of at least 0.5 mm, preferably at least 1 mm.

Preferably, the step of sealing the passage 19 of discharging air is performed whilst the pressure is applied on the housing chamber 15 for discharging excess air from the container 13.

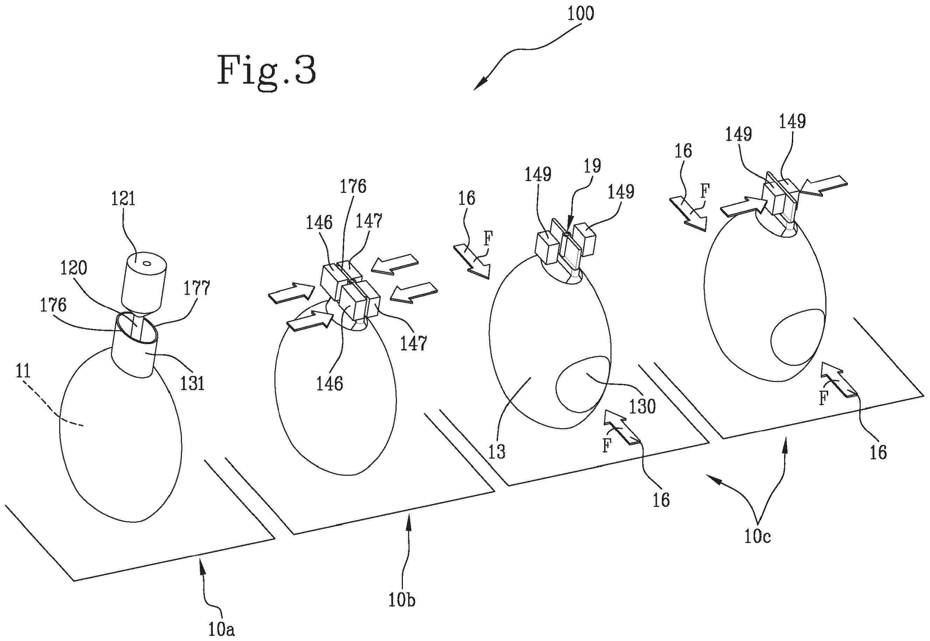

Alternatively, the step of sealing the passage 19 for discharging excess air is carried out after an interval of time from the start of the step of applying a pressure to the housing chamber 15. Figure 3 illustrates a further preferred embodiment of the apparatus and the process according to the invention, which has components similar to those of the first preferred embodiment and which, to avoid making this description too lengthy, are not described again in detail.

The further preferred embodiment of the apparatus and the process differs from the first preferred embodiment in that the passage 19 for discharging air is obtained by partly closing the opening 17 for introducing the liquid into the chamber 15.

Advantageously, as illustrated, according to the second preferred embodiment of the process, the partial closing of the opening 17 for introducing the liquid in the chamber 15 is performed by joining, that is to say, sealing together, one or more parts of the opening 17. Advantageously, as illustrated, according to the second preferred embodiment of the process or apparatus, the opposite faces of opposite lateral zones 176, 177 of the opening 17 close, or join, in particular leaving, in the opening 17 an intermediate passage, preferably central, defining the passage 19 for the discharging of the excess air.

Preferably, as illustrated, according to the second preferred embodiment of the process, the opposite zones 176, 177 of the opening 17 are closed or joined together, leaving in the opening 17 a passage designed to define the passage 19 for the discharging the excess air, the passage 19 having a respective width which is equal or substantially equal to 0.5 mm, preferably at least 1 mm.

Advantageously, according to the process, in order to discharge the excess air from the container 13 the excess air is moved in such a way as to move it through the passage 19 for discharging excess air from the container 13, in particular by exerting a thrust or compression on the excess air.

Advantageously, as may be inferred from Figures 1 and 3, according to the process, in order to discharge excess air from the container 13 the container 13 is compressed or flattened, in particular at a zone of the container 13 in which the product 11 is located.

Advantageously, as again is evident from Figures 1 and 3, according to the process for discharging excess air from the container 13 the container 13 is compressed at its lateral zone 130.

As may be inferred from the drawings, the process thus closes the passage 19 for discharging the excess air.

According to the process, the passage 19 for discharging the excess air closes through the means 141, 142 for sealing the opening 17.

Advantageously, as may be inferred from Figure 3, according to the second preferred embodiment of the process and relative apparatus, the passage 19 for discharging excess air closes through respective sealing means 149, 149, in particular separate or different from the means 141, 142 which are configured to partly close the opening 17 and which, preferably, can be in the form of corresponding means for joining, or sealing, one or more parts of the opening 17.

Advantageously, as may be inferred from the drawings, according to the process, the closing of the passage 19 for discharging excess air is performed during the step for pushing said excess air, that is, during the step for compressing the container 13.

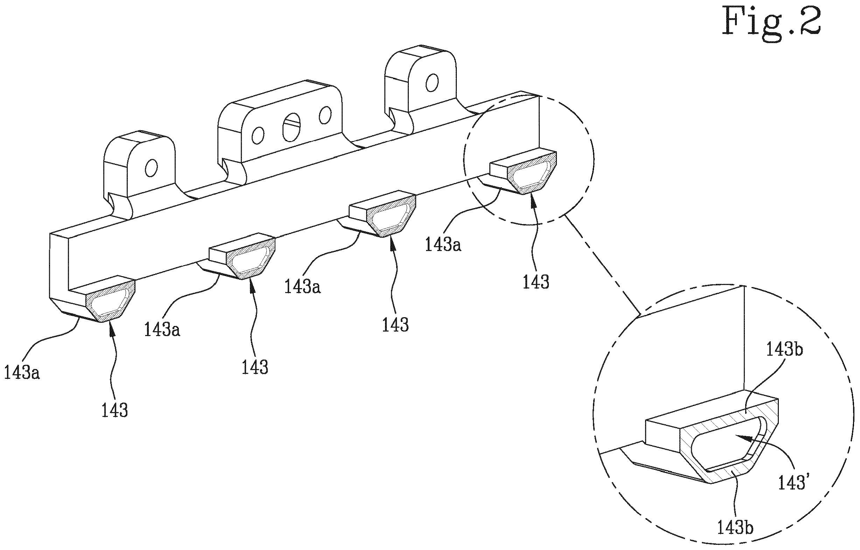

Advantageously, as may be inferred in particular from Figure 2, according to the process, the closing passage defines in the respective passage 19, pockets, or spaces, for expansion or occupation by said product 11 moving towards the passage 19 for discharging the excess air.

The invention provides an apparatus for actuating the process described above (see in particular Figures 4 to 11).

The apparatus 10 for making the package for containing the liquid or semi-liquid product 11 comprises means 12 for introducing the product 11 in the housing chamber 15 of the container 13, through a filling opening 17 which emerges in the housing chamber 15.

The apparatus 10 comprises means 14 for partial closing designed to make, at the filling opening 17, at least one passage 19 for discharging excess air which emerges in the housing chamber 15 and configured in such a way as to partially close the filling opening 17.

The apparatus 10 comprises means 16 for applying pressure designed to exert a pressure on the housing chamber 15 for discharging excess air from the housing chamber 15, through the at least one passage 19 for discharging the excess air, where the at least one passage 19 comprises a first stretch 19a for discharge of the air, proximal to the housing chamber 15, designed to be occupied by the product 11 following the complete discharge of the excess air from the housing chamber 15, and a second stretch 19b positioned contiguous with the first stretch 19a and distal from the housing chamber 15, the second stretch 19b not being occupied by the product 11 following the pressure exerted on the housing chamber 15. The apparatus also comprises complete closing means 14 configured to act in a zone astride the first stretch 19a and the second stretch 19b in such a way to touch both the first stretch 19a and the second stretch 19b for the permanent sealing, in particular in a hermetically sealed fashion, of the passage 19 for discharging excess air.

Preferably, the means 14 for partial closing and/or the means 14 for complete closing comprise means 141, 142, 149 for joining, or sealing, consisting of first and second opposite elements 141, 142 or 146, 146, 147, 147 and 149, 149 for joining, or sealing.

The elements 141, 142 or 146, 146, 147, 147 and 149, 149 are movable, in particular transversely to the respective opening 17 or passage 19, between a far position and a close position for engaging the container 13 and a close or sealing position, of the opposite faces, or parts of faces, of the opening 17 or passage 19.

Preferably, at least one of the corresponding joining or sealing elements has a surface 143 for engaging the container 13 and the joining or sealing of the opposite faces of the passage 19 for discharging the excess air. The engagement surface 143 has a transversal portion 143a designed to close the passage 19.

Corresponding longitudinal portions 143b spaced especially transversely, from each other, extend from the transversal portion 143a, in particular towards the inner housing chamber 15 of the container 13.

In light of this, the longitudinal portions 143b of the engagement surface 143 are configured in such a way as to define, in the passage 19 for discharging excess air, corresponding expansion pockets or spaces for the product.

Again with reference to Figures 1 to 11, the introduction means 12 comprise a dispensing element 120 which is introduced into the filling opening 17 and which is supported by a corresponding head 121 which is movable between an advanced position for introducing the element in the passage and dispensing the product and a withdrawn position, wherein the dispensing element is outside the passage and the dispensing of the product 11 is interrupted.

As may be inferred in particular from Figure 1, the product is dispensed in a respective station 10a of the apparatus 10.

In Figures 1 and 8 to 11, the means 14 for the partial closing of the opening 17 form the passage 19 for discharging the excess air and designed to slow the discharge of the product 11.

The means 14 for the partial closing of the opening 17 are separate from the means 14 for complete closing or sealing.

Preferably, the partial closing means 14 define a passage 19 for discharging excess air with a geometry, in particular having a respective cross section and/or respective length, which is such as to impart to said product 11 a speed of passing through the passage 19 which is preferably less than 10,000 times the speed of passing through the passage 19 by the excess air.

Advantageously, as shown in the drawings, the partial closing means 14 for the making the passage 19 for discharging the excess air make the same passage 19 at, or coinciding with, the opening 17.

Advantageously, as mentioned above, the passage 19 for discharging the excess air has dimensions, in particular the respective transversal cross section, which are less than the dimensions, in particular of the transversal cross section, of the opening 17 for introducing said product 11.

Advantageously, as may be inferred in particular from Figure 1, the partial closing means 14 designed to make the passage 19 for discharging air from the container 13 are a station 10b of the apparatus 10 located downstream of the filling station 10a.

Advantageously, the partial closing means 14 form the same passage 19 by reducing the cross section, that is to say, at least one dimension of the opening 17.

Advantageously, the partial closing means 14 for making the passage 19 are in the form of means which are configured to move together the opposite faces 171, 172 of the opening.

The means 14 for complete closing or sealing which are designed to move together opposite faces 171, 172 of the opening 17 are defined by sealing means 14, in particular in the form of joining means, of the opposite faces 171, 172 of the opening 17.

Advantageously, the complete closing means, that is, the joining or sealing means 14 of opposite faces 171, 172 of the opening 17, are configured to move together the opposite faces to a distance S which is equal to 0.5 mm, preferably 1 mm.

A second embodiment 100 of the apparatus differs from the previous first embodiment 10 in that the means for partial closing and the complete closing or sealing means are joined together. The means for partly closing the opening 17 and the complete joining or sealing means are in the form of single heads for joining one or more parts of the opening 17, that is to say, one or more parts of opposite faces of the opening 17. Advantageously, the joining, or sealing, means comprise respective and opposite joining or sealing means 146, 146 and 147, 147 which close, or join, the opposite faces of opposite lateral zones 176, 177 of the opening 17, in particular leaving in the opening 17 an intermediate passage, preferably central, defining the passage 19 for the discharging of the excess air.

Preferably, the joining, or sealing, means comprise respective and opposite joining, or sealing, means 146, 146 and 147, 147 which close, or join opposite zones 176, 177 of the opening 17 for introducing liquid in the housing 15, leaving in the opening 17 a passage designed to define the passage 19 for discharging the excess air, the passage 19 having a respective width which is preferably equal, or close to 0.5 mm.

As illustrated, in said Figure 1, the passage 19 also has a suitable perpendicular extension V to define a narrow passage channel 19.

Advantageously, as may be inferred from Figures 1 and 2, there are means 16, 16 for applying pressure designed to apply a pressure on the chamber 15 for discharging excess air from the housing chamber 15, in particular by applying a thrust or compression F on the excess air. Advantageously, as may be inferred from the drawings, the means for applying a pressure 16, 16 are in the form of means designed to compress or flatten the container 13, in particular at a zone of the container 13 in which the product 11 is located, in particular at a lateral zone 130 of it. Advantageously, the means 16, 16 for applying a pressure are at a station 10b of the apparatus which corresponds to the station 10b for making the passage 19 for discharging excess air.

Advantageously, as may be inferred from Figures 1 and 3 and from 4 to 11, there are means 141, 142 or 149, 149 for closing the passage 19 for discharging the excess air.

Advantageously, as may be inferred in particular from Figure 1, the means for closing the passage 19 for discharging excess air are defined by the means 141, 142 for joining, or sealing, the opening 17 for introducing the product in the housing 15 of the container 13.

Advantageously, as may be inferred from the drawings, the means for closing the passage 19 for discharging excess air close the same passage 19, whilst the means 16 apply a pressure.

As mentioned above, as may be inferred from Figure 3, according to the second preferred embodiment of the apparatus, the means 14 for closing the passage 19 for discharging excess air are defined by respective joining, or sealing, means 141, 142, 149, 149, in particular different from the means for partly closing the opening 17 and, preferably, in the form of corresponding means for joining, or sealing, of one or more parts of the opening 17. Advantageously, as may be inferred in particular from Figure 3, the means for closing the passage 19 for discharging excess air are at a station 10c of the apparatus which is downstream of the station 10b in which the means for making the passage 19 for discharging of excess air operate, and which comprise means for partly closing the opening 17. These means are means 146, 146 and 147, 147 for joining, or sealing, one or more parts of the opening 17.

Preferably, as may be inferred from the drawings, the means for closing, or partial closing, of the respective passage are corresponding means 14 for joining, or sealing, comprising a first and a second opposite element 141, 142 or 146, 146, 147, 147 and 149, 149 for joining, or sealing, which preferably comprise heated elements.

These elements 141, 142 or 146, 146, 147, 147 and 149, 149 are movable, in particular transversely to the respective passage, between a far position and a close position for engaging the wrapper and a close and joining position, in particular for sealing, of the opposite faces, or parts of faces, of the respective passage.

Advantageously, as may be inferred in particular from Figure 2, according to a first preferred embodiment 10 of the apparatus, the means 14 for joining or sealing opposite faces of the respective passage 17, 19 are shaped in such a way as to define, in the joining, or sealing, expansion pockets or spaces for the product 11, which in this way does not risk interposing between the parts or faces to be joined to each other of the respective passage and thus making the joining or sealing less effective. Advantageously, as may be inferred in particular from Figure 2, according to a first preferred embodiment of the apparatus, at least one of the corresponding joining, or sealing, elements has a surface 143 for engaging the container 13 and for joining or sealing opposite faces of the passage 19 for discharging the excess air, the engagement surface 143 having a transversely elongate portion 143a which is designed to close the passage 19, and from the transversal portion 143a extend, in particular towards the inner housing 15 of the container 13, corresponding longitudinal portions 143b spaced, in particular transversely from each other, in such a way as to define, between the longitudinal portions 143b, cavities 143', which are designed to provide in the container, or passage 19, corresponding expansion pockets or spaces for the product 11.

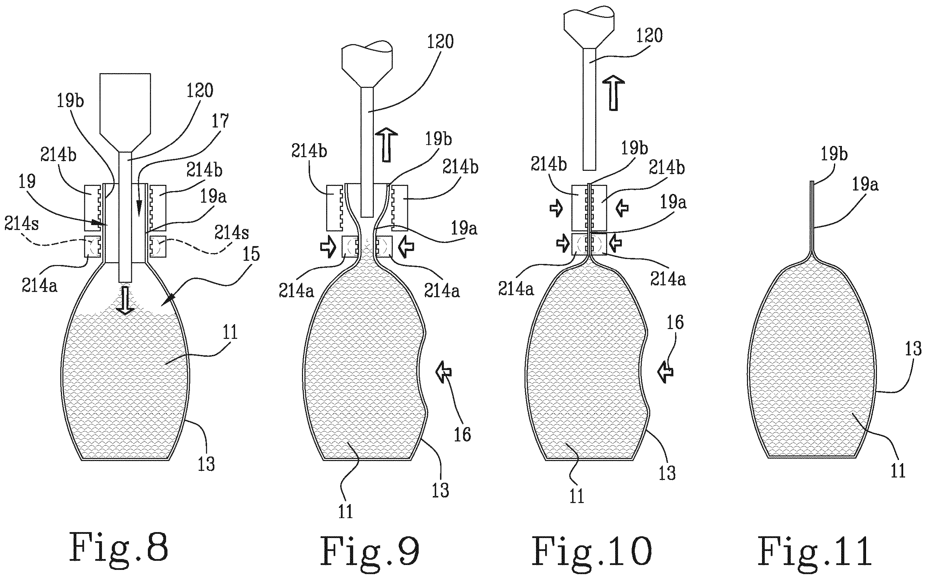

In order to clarify better the apparatus according to the invention, Figures 4 to 7 illustrate a first solution which comprises the partial closing means 14 and the complete closing or sealing means 14 integral with each other (using a pair of pushing and sealing heads opposite each other), whilst Figures 8 to 11 illustrate a second embodiment which comprises a separation between the partial closing means 14 and the complete closing or sealing means 14 (thanks to the presence of various pushing or sealing pairs).

Starting from Figure 4, the apparatus comprises the closing means 14 consisting of two closing and sealing heads 214 opposite the opening 17 forming the two stretches 19a and 19b of the passage 19. Figure 4 shows the nozzle 120 for feeding product 11 inserted in the container 13. After filling the container 13, the nozzle 120 lifts and, see Figure 5, the two heads 214 start moving closer to the opening 17.

At the same time as the heads 214 are moved close, the pressure, through the pressure means 16, is exerted on the container 13 to allow the discharge of the air from the housing chamber 15 (see Figure 5).

This pressure brings a part of the product 11 to touch the first proximal stretch 19a of the opening 19 during the closing, so as to guarantee the maximum discharge of the air from the container 13.

Subsequently, the heads 214 close the opening 17 through the sealing of the passage 19 without the product 11 touching the second stretch 19b of the opening 19 thus guaranteeing a "clean" sealing without residue (see Figures 6 and 7).

It should be noted that the lower head portion 214, that is, the one pushing on the first proximal stretch 19a has internal pockets 214s to allow the possibility of venting air or partial containment of product during the closing step.

In the embodiment illustrated in Figures 8 to 11, the apparatus comprises two pairs of heads 214a and 214b which define the corresponding partial closing means and the closing or sealing means.

In this specific case, see Figure 8, there is the nozzle 120 for feeding the product 11 inserted in the container 13. After filling the container 13, the nozzle 120 lifts and, see Figure 6, the first pair of heads 214a starts moving towards the opening 17 and in the vicinity of the first proximal stretch 19a.

At the same time as the first pair of heads 214a are moved close, the pressure, through the pressure means 16, is exerted on the container 13 to allow the discharge of the air from the housing chamber 15 (see Figure 9).

This pressure brings a part of the product 11 to touch the first proximal stretch 19a of the opening 19 during the partial closing, so as to guarantee the maximum discharge of the air from the container 13.

It should be noted that the first pair of lower heads 214, that is, the one pushing on the first proximal stretch 19a has internal pockets 214s to allow the possibility of venting air or partial containment of product during the closing step.

Subsequently, the first pair of heads 214a closes completely the first proximal stretch 19a of the opening 19, whilst the second pair of heads 214b also starts moving together to allow the complete sealing of the passage 19 without the product 11 touching the second stretch 19b of the opening 19 thus guaranteeing a "clean" seal without residue (see Figures 10 and 11).

It should be noted that the second pair of heads 214b may comprise a relative lower projection 214c configured so as to also seal a part of the first proximal stretch 19a, at the same time, if necessary, as a partial movement of the first pair of heads 214a. In practice, as is evident, the technical features described above allow the invention, individually or in respective combination, to achieve one or more of the following advantageous results:
- it is possible to avoid an acceleration of the process of deterioration of the food product and give the package in its entirety a desirable configuration, especially for consumers of such a type of product;
- it is possible to have available a process and an apparatus which operate in a particularly efficient manner;
- it is possible to have available a process and an apparatus which operate in a particularly fast manner;
- it is possible to have available a process and an apparatus which allow a reduction in the number of components which are used;
- it is possible to have available a method and an apparatus which are particularly reliable to use;
- it is possible to have available a method and an apparatus which allow high quality products to be obtained;
- it is possible to have available a method and an apparatus which allow products of high durability to be obtained;
- it is possible to have available a process and an apparatus which have a reduced construction cost.

## Claims

1. A process for making a package for containing a liquid or semi-liquid product (11), in the form of a food product, defined by processed cheese, yoghurt or the like; the package comprising a container (13); said container being in the form of a body (13) defining an inner chamber (15) for housing the product (11); said process comprising sequentially the following steps:
- introducing the product (11) in said chamber (15) for housing the container (13) through a filling opening (17) which emerges in said housing chamber (15);
- partly closing said filling opening (17) in such a way as to make at least one passage (19) for discharging the excess air present in said housing chamber (15);
- applying a pressure on said housing chamber (15) for discharging the excess air present in the housing chamber (15) through said at least one passage (19) for discharging the excess air; and
- sealing, in particular in a hermetically sealed fashion, said at least one passage (19) for discharging the excess air
**characterised in that** during said step of applying a pressure on said housing chamber (15), said product (11) is forced to occupy a first stretch (19a) of said at least one passage (19) for discharging the air, proximal to said housing chamber (15), after the complete discharging of excess air from said housing chamber (15); a second stretch (19b) of said at least one passage (19), positioned contiguous to said first stretch (19a) and distal from said housing chamber (15), not being occupied by said product (11) during the application of the pressure on said housing chamber (15), and **in that** said sealing step is performed with sealing means (141, 142; 149, 214, 214a, 214b) which act in a zone astride said first (19a) and second (19b) stretch in such a way as to touch both said first stretch (19a), and said second stretch (19b) for the permanent sealing of said at least one passage (19).

2. The process according to claim 1, wherein said passage (19) for discharging the excess air has dimensions of the respective transversal cross section which are less than the dimensions of the transversal cross section of said filling opening (17).

3. The process according to claim 1 or 2, wherein said passage (19) for discharging the air is provided by moving close together opposite faces (171, 172) of said filling opening (17).

4. The process according to any one of the preceding claims, wherein said partial closing of the filling opening (17) is performed by joining, that is to say, sealing together, one or more parts of the filling opening (17), that is, one or more opposite faces of opposite lateral zones (176, 177) of the filling opening (17).

5. The process according to any one of the preceding claims, wherein the step of applying a pressure on said housing chamber (15) comprises the step of applying a thrust or compression on at least a portion of said housing chamber (15) in a zone in which said product (11) is located.

6. The process according to any one of the preceding claims, wherein the housing chamber (15) is made at least partly of deformable material.

7. The process according to any one of the preceding claims, wherein the viscosity of said product (11) is at least 50 times, preferably 400 times, the viscosity of the excess air.

8. The process according to any one of the preceding claims, wherein the speed of passing through said passage (19) by said product (11) is less than 10,000 times the speed of passing through said passage (19) by the excess air.

9. The process according to any one of the preceding claims, wherein said passage (19) has a length of at least 0.5 mm, preferably at least 1 mm.

10. The process according to any one of the preceding claims, wherein said step of sealing said passage (19) for discharging air is performed whilst the pressure is applied on said housing chamber (15) for discharging excess air from said container (13).

11. The process according to any one of claims 1 to 9, wherein the step of sealing the passage (19) for discharging excess air is performed after an interval of time from the start of the step of applying a pressure on said housing chamber (15).

12. An apparatus (10) for making a package for containing a liquid or semi-liquid product (11), in the form of a food product, preferably defined by processed cheese, yoghurt or the like according to any one of claims 1 to 11; the package comprising a container (13); said container being in the form of a body (13) defining an inner chamber (15) for housing said product (11); the apparatus comprising:
- means (12) for introducing said product (11) in said housing chamber (15) of said container (13), through a filling opening (17) which emerges in said housing chamber (15);
- means (14) for partial closing designed to make, at the filling opening (17), a passage (19) for discharging excess air which emerges in said housing chamber (15) and configured in such a way as to partially close said filling opening (17);
- means (16) for applying pressure designed to exert a pressure on said housing chamber (15) for discharging excess air from said housing chamber (15), through said at least one passage (19) for discharging the excess air, wherein said at least one passage (19) comprises a first stretch (19a) for discharging air, proximal to said housing chamber (15), designed to be occupied by said product (11) after the complete discharge of excess air from said housing chamber (15), and a second stretch (19b) positioned contiguous to said first stretch (19a) and distal from said housing chamber (15), said second stretch (19b) not being occupied by said product (11) following the pressure applied on said housing chamber (15);
- complete closing means (14) configured to act in a zone astride said first stretch (19a) and second stretch (19b) in such a way to touch both said first stretch 19a and said second stretch (19b) for the permanent sealing, in particular in a hermetically sealed fashion, of said passage (19) for discharging excess air,
**characterized in that** the means (14) for partial closing comprise two closing and sealing heads (214) opposite the opening (17) forming the two stretches (19a, 19b) of the passage (19); the lower head portion of each closing and sealing heads (214), that is, the one pushing on the first proximal stretch (19a) having internal pockets (214s) to allow the possibility of venting air or partial containment of product during the partially closing step.

13. The apparatus according to claim 12, wherein said means (14) for partial closing and/or said means (14) for complete closing comprise means (141, 142, 149, 214, 214a, 214b) for joining, or sealing, first and second opposite elements (141, 142 or 146, 146, 147, 147and 149, 149) for joining, or sealing, said opposite elements (141, 142 or 146, 146, 147, 147and 149, 149) being movable, in particular transversely to the respective passage (17, 19), between a far position and a close position for engaging the container and a close or sealing position, of the opposite faces, or parts of faces, of the respective passage (17, 19).

14. The apparatus according to the preceding claim, wherein at least one of the corresponding joining, or sealing, elements has a surface (143) for engaging said container (13) and for joining, or sealing, opposite faces of said passage (19) for discharging excess air, said engagement surface (143) having a transversal portion (143a) designed to close said passage (19), from the transversal portion (143a) extending, in particular towards the inner housing (15) of the container (13), corresponding longitudinal portions (143b) spaced apart, especially transversely, from each other.

15. The apparatus according to the preceding claim, wherein said longitudinal portions (143b) of said engagement surface (143) are configured in such a way as to define, in said passage (19) for discharging excess air, corresponding pockets or expansion spaces for the product.

## Patentansprüche

1. Verfahren zur Herstellung einer Verpackung zum Enthalten eines flüssigen oder halbflüssigen Produkts (11) in der Form eines Lebensmittelprodukts, definiert durch verarbeiteten Käse, Joghurt oder dergleichen, wobei die Verpackung einen Behälter (13) umfasst, wobei der Behälter die Form eines Gehäuses (13) aufweist, definierend eine innere Kammer (15) zur Aufnahme des Produkts (11), wobei das Verfahren nacheinander die folgenden Schritte umfasst:
- Einführen des Produkts (11) in die Kammer (15) zur Aufnahme des Behälters (13) durch eine Einfüllöffnung (17), die in der Aufnahmekammer (15) hervortritt;
- teilweise Verschließen der Einfüllöffnung (17), sodass mindestens ein Durchlass (19) ausgebildet wird, um die in der Aufnahmekammer (15) enthaltene überschüssige Luft abzulassen;
- Ausüben eines Drucks auf die Aufnahmekammer (15), um die in der Aufnahmekammer (15) enthaltene überschüssige Luft durch den Durchlass (19) zum Ablassen der überschüssigen Luft abzulassen, und
- Versiegeln des mindestens einen Durchlasses (19) zum Ablassen der überschüssigen Luft, insbesondere auf eine hermetisch abgedichtete Weise,
**dadurch gekennzeichnet, dass** das Produkt (11) während des Schritts zum Ausüben eines Drucks auf die Aufnahmekammer (15) forciert wird, ein erstes Teilstück (19a) des mindestens einen Durchlasses (19) zum Ablassen der Luft proximal zur Aufnahmekammer (15) nach dem vollständigen Ablassen von überschüssiger Luft aus der Aufnahmekammer (15) zu besetzen, wobei ein zweites Teilstück (19b) des mindestens einen Durchlasses (19), das angrenzend an das erste Teilstück (19a) und distal von der Aufnahmekammer (15) angeordnet ist, während des Ausübens des Drucks auf die Aufnahmekammer (15) nicht vom Produkt (11) besetzt wird, und dadurch, dass der Schritt zum Versiegeln mit Versiegelungsmitteln (141, 142; 149, 214, 214a, 214b) durchgeführt wird, die in einer Zone gleichauf mit dem ersten Teilstück (19a) und dem zweiten Teilstück (19b) wirken, sodass sowohl das erste Teilstück (19a) als auch das zweite Teilstück (19b) berührt werden, um den mindestens einen Durchlass (19) dauerhaft zu versiegeln.

2. Verfahren nach Anspruch 1, wobei der Durchlass (19) zum Ablassen der überschüssigen Luft die Abmessungen des jeweiligen Querschnitts aufweist, die geringer sind als die Abmessungen des Querschnitts der Füllöffnung (17).

3. Verfahren nach Anspruch 1 oder 2, wobei der Durchlass (19) zum Ablassen der Luft bereitgestellt wird, indem entgegengesetzte Seitenflächen (171, 172) der Füllöffnung (17) einander angenähert werden.

4. Verfahren nach einem der vorhergehenden Ansprüche, wobei das teilweise Verschließen der Füllöffnung (17) durchgeführt wird, indem ein oder mehrere Teile der Füllöffnung (17), das heißt, ein oder mehrere entgegengesetzte Seitenflächen entgegengesetzter Seitenzonen (176, 177) der Füllöffnung (17), zusammengefügt, d. h. miteinander versiegelt werden.

5. Verfahren nach einem der vorhergehenden Ansprüche, wobei der Schritt zum Ausüben eines Drucks auf die Aufnahmekammer (15) den Schritt zum Ausüben eines Axialdrucks oder einer Kompression auf mindestens einen Abschnitt der Aufnahmekammer (15) in einer Zone, in der sich das Produkt (11) befindet, umfasst.

6. Verfahren nach einem der vorhergehenden Ansprüche, wobei die Aufnahmekammer (15) zumindest teilweise aus verformbarem Material gefertigt ist.

7. Verfahren nach einem der vorhergehenden Ansprüche, wobei die Viskosität des Produkts (11) die Viskosität der überschüssigen Luft mindestens um das 50-Fache, vorzugsweise das 400-Fache, überschreitet.

8. Verfahren nach einem der vorhergehenden Ansprüche, wobei die Geschwindigkeit des Durchströmens des Produkts (11) durch den Durchlass (19) um das 10.000-Fache geringer ist als die Geschwindigkeit des Durchströmens der überschüssigen Luft durch den Durchlass (19).

9. Verfahren nach einem der vorhergehenden Ansprüche, wobei der Durchlass (19) eine Länge von mindestens 0,5 mm, vorzugsweise von mindestens 1 mm, beträgt.

10. Verfahren nach einem der vorhergehenden Ansprüche, wobei der Schritt zum Versiegeln des Durchlasses (19) zum Ablassen von Luft durchgeführt wird, während der Druck auf die Aufnahmekammer (15) zum Ablassen von überschüssiger Luft aus dem Behälter (13) ausgeübt wird.

11. Verfahren nach einem der Ansprüche 1 bis 9, wobei der Schritt zum Versiegeln des Durchlasses (19) zum Ablassen von überschüssiger Luft nach einem Zeitintervall nach dem Start des Schritts zum Ausüben eines Drucks auf die Aufnahmekammer (15) durchgeführt wird.

12. Vorrichtung (10) zur Herstellung einer Verpackung zum Enthalten eines flüssigen oder halbflüssigen Produkts (11) in der Form eines Lebensmittelprodukts, vorzugsweise definiert durch verarbeiteten Käse, Joghurt oder dergleichen, nach einem der Ansprüche 1 bis 11, wobei die Verpackung einen Behälter (13) umfasst, wobei der Behälter die Form eines Gehäuses (13) aufweist, definierend eine innere Kammer (15) zur Aufnahme des Produkts (11), wobei die Vorrichtung Folgendes umfasst:
- Mittel (12) zum Einführen des Produkts (11) in die Aufnahmekammer (15) des Behälters (13) durch eine Füllöffnung (17), die in der Aufnahmekammer (15) hervortritt;
- Mittel (14) zum teilweisen Verschließen, die ausgestaltet sind, um an der Füllöffnung (17) einen Durchlass (19) zum Ablassen von überschüssiger Luft auszubilden, der in der Aufnahmekammer (15) hervortritt, und so ausgelegt, dass die Füllöffnung (17) teilweise verschlossen wird;
- Mittel (16) zum Ausüben eines Drucks, die ausgestaltet sind, um einen Druck auf die Aufnahmekammer (15) auszuüben, um überschüssige Luft aus der Aufnahmekammer (15) durch den mindestens einen Durchlass (19) zum Ablassen der überschüssigen Luft abzulassen, wobei der mindestens eine Durchlass (19) ein erstes Teilstück (19a) zum Ablassen von Luft umfasst, das proximal zur Aufnahmekammer (15) angeordnet und ausgestaltet ist, um vom Produkt (11) besetzt zu werden, nachdem die überschüssige Luft vollständig aus der Aufnahmekammer (15) abgelassen wurde, und ein zweites Teilstück (19b), das angrenzend an das erste Teilstück (19a) und distal von der Aufnahmekammer (15) angeordnet ist, wobei das zweite Teilstück (19b) nicht vom Produkt (11) besetzt wird, nachdem Druck auf die Aufnahmekammer (15) ausgeübt wurde;
- Mittel zum vollständigen Verschließen (14), die ausgelegt sind, um in einer Zone gleichauf mit dem ersten Teilstück (19a) und dem zweiten Teilstück (19b) zu wirken, sodass sowohl das erste Teilstück (19a) als auch das zweite Teilstück (19b) berührt werden, um den Durchlass (19) zum Ablassen überschüssiger Luft dauerhaft und insbesondere auf eine hermetisch abgedichtete Weise zu versiegeln,
**dadurch gekennzeichnet, dass** die Mittel (14) zum teilweisen Verschließen zwei Verschließ- und Versiegelungsköpfe (214) umfassen, die der Öffnung (17) entgegengesetzt sind, formend die zwei Teilstücke (19a, 19b) des Durchlasses (19), wobei der untere Kopfabschnitt eines jeden Verschließ- und Versiegelungskopfes (214), das heißt, derjenige, der auf das erste proximale Teilstück (19a) drückt, interne Taschen (214s) aufweist, um die Möglichkeit zum Entlüften oder zum teilweisen Enthalten von Produkt während des Schritts zum teilweisen Verschließen zu erlauben.

13. Vorrichtung nach Anspruch 12, wobei die Mittel (14) zum teilweisen Verschließen und/oder die Mittel (14) zum vollständigen Verschließen Mittel (141, 142, 149, 214, 214a, 214b) zum Zusammenfügen oder Versiegeln, erste und zweite entgegengesetzte Elemente (141, 142 oder 146, 146, 147, 147 und 149, 149) zum Zusammenfügen oder Versiegeln umfassen, wobei die entgegengesetzten Elemente (141, 142 oder 146, 146, 147, 147 und 149, 149) insbesondere quer zum jeweiligen Durchlass (17, 19) zwischen einer entfernten Position und einer nahen Position, um mit dem Behälter in Eingriff zu gelangen, und einer Verschließ- oder Versiegelungsposition der entgegengesetzten Seitenflächen oder von Teilen von Seitenflächen des jeweiligen Durchlasses (17, 19) bewegbar sind.

14. Vorrichtung nach dem vorhergehenden Anspruch, wobei mindestens eins der entsprechenden Zusammenfügungs- oder Versiegelungselemente eine Oberfläche (143) aufweist, um mit dem Behälter (13) in Eingriff zu gelangen und entgegengesetzte Seitenflächen des Durchlasses (19) zum Ablassen überschüssiger Luft zusammenzufügen oder zu versiegeln, wobei die Eingriffsoberfläche (143) einen Querabschnitt (143a) aufweist, der ausgestaltet ist, um den Durchlass (19) vom Querabschnitt (143a) zu verschließen, sich erstreckend insbesondere hinführend zur inneren Aufnahme (15) des Behälters (13), entsprechend Längsabschnitten (143b), die insbesondere quer voneinander beabstandet sind.

15. Vorrichtung nach dem vorhergehenden Anspruch, wobei die Längsabschnitte (143b) der Eingriffsoberfläche (143) ausgelegt sind, um im Durchlass (19) zum Ablassen überschüssiger Luft entsprechende Taschen oder Ausdehnungsbereiche für das Produkt zu definieren.

## Revendications

1. Procédé de fabrication d'un emballage pour contenir un produit liquide ou semi-liquide (11), sous la forme d'un produit alimentaire, défini par le fromage fondu, le yaourt ou similaire ; l'emballage comprenant un récipient (13) ; ledit récipient se présentant sous la forme d'un corps (13) définissant une chambre intérieure (15) pour loger le produit (11) ; ledit procédé comprenant en séquences les étapes suivantes :
- introduire le produit (11) dans ladite chambre (15) pour loger le récipient (13) à travers une ouverture de remplissage (17) qui émerge dans ladite chambre de logement (15) ;
- fermer partiellement ladite ouverture de remplissage (17) de manière à créer au moins un passage (19) pour évacuer l'excès d'air présent dans ladite chambre de logement (15) ;
- appliquer une pression sur ladite chambre de logement (15) pour évacuer l'excès d'air présent dans la chambre de logement (15) à travers ledit au moins un passage (19) pour évacuer l'excès d'air ; et
- sceller, en particulier par scellage hermétique, ledit au moins un passage (19) pour évacuer l'excès d'air,
**caractérisé en ce que** pendant ladite étape consistant à appliquer une pression sur ladite chambre de logement (15), ledit produit (11) est forcé d'occuper un premier tronçon (19a) dudit au moins un passage (19) pour évacuer l'air, à proximité de ladite chambre de logement (15), après l'évacuation complète de l'excès d'air de ladite chambre de logement (15) ; un deuxième tronçon (19b) dudit au moins un passage (19), positionné de façon contiguë audit premier tronçon (19a) et distal de ladite chambre de logement (15), n'étant pas occupé par ledit produit (11) pendant l'application de la pression sur ladite chambre de logement (15), et **en ce que** ladite étape de scellage est réalisée avec des moyens de scellage (141, 142 ; 149, 214, 214a, 214b) qui agissent dans une zone à cheval sur lesdits premier (19a) et deuxième (19b) tronçons de manière à toucher à la fois ledit premier tronçon (19a) et ledit deuxième tronçon (19b) pour le scellage permanent dudit au moins un passage (19).

2. Procédé selon la revendication 1, dans lequel ledit passage (19) pour l'évacuation de l'excès d'air a des dimensions de la section transversale respective qui sont inférieures aux dimensions de la section transversale de ladite ouverture de remplissage (17).

3. Procédé selon la revendication 1 ou 2, dans lequel ledit passage (19) pour l'évacuation de l'air est prévu en rapprochant les faces opposées (171, 172) de ladite ouverture de remplissage (17).

4. Procédé selon l'une quelconque des revendications précédentes, dans lequel ladite fermeture partielle de l'ouverture de remplissage (17) est réalisée en joignant, c'est-à-dire en scellant ensemble, une ou plusieurs parties de l'ouverture de remplissage (17), c'est-à-dire une ou plusieurs faces opposées de zones latérales opposées (176, 177) de l'ouverture de remplissage (17).

5. Procédé selon l'une quelconque des revendications précédentes, dans lequel l'étape consistant à appliquer une pression sur ladite chambre de logement (15) comprend l'étape consistant à appliquer une poussée ou une compression sur au moins une portion de ladite chambre de logement (15) dans une zone dans laquelle se trouve ledit produit (11).

6. Procédé selon l'une quelconque des revendications précédentes, dans lequel la chambre de logement (15) est réalisée au moins en partie en matériau déformable.

7. Procédé selon l'une quelconque des revendications précédentes, dans lequel la viscosité dudit produit (11) est au moins 50 fois, de préférence 400 fois, la viscosité de l'excès d'air.

8. Procédé selon l'une quelconque des revendications précédentes, dans lequel la vitesse de passage dudit produit (11) à travers ledit passage (19) est 10 000 fois inférieure à la vitesse de passage de l'excès d'air à travers ledit passage (19).

9. Procédé selon l'une quelconque des revendications précédentes, dans lequel ledit passage (19) a une longueur d'au moins 0,5 mm, de préférence d'au moins 1 mm.

10. Procédé selon l'une quelconque des revendications précédentes, dans lequel l'étape consistant à sceller ledit passage (19) pour l'évacuation de l'air est effectuée alors que la pression est appliquée sur ladite chambre de logement (15) pour évacuer l'excès d'air dudit récipient (13).

11. Procédé selon l'une quelconque des revendications 1 à 9, dans lequel l'étape consistant à sceller le passage (19) pour évacuer l'excès d'air est effectuée après un intervalle de temps à partir du début de l'étape consistant à appliquer une pression sur ladite chambre de logement (15).

12. Appareil (10) de fabrication d'un emballage pour contenir un produit liquide ou semi-liquide (11), sous forme de produit alimentaire, de préférence défini par un fromage fondu, un yaourt ou similaire selon l'une quelconque des revendications 1 à 11 ; l'emballage comprenant un récipient (13) ; ledit récipient se présentant sous la forme d'un corps (13) définissant une chambre intérieure (15) pour loger ledit produit (11) ; l'appareil comprenant :
- des moyens (12) d'introduction dudit produit (11) dans ladite chambre de logement (15) dudit récipient (13), à travers une ouverture de remplissage (17) qui émerge dans ladite chambre de logement (15) ;
- des moyens (14) de fermeture partielle destinés à réaliser, en correspondance de l'ouverture de remplissage (17), un passage (19) pour l'évacuation de l'excès d'air qui émerge dans ladite chambre de logement (15) et configurés de manière à fermer partiellement ladite ouverture de remplissage (17) ;
- des moyens (16), pour appliquer une pression, destinés à exercer une pression sur ladite chambre de logement (15) pour évacuer l'excès d'air de ladite chambre de logement (15), à travers ledit au moins un passage (19) pour évacuer l'excès d'air, dans lequel ledit au moins un passage (19) comprend un premier tronçon (19a) pour évacuer l'air, proximal à ladite chambre de logement (15), conçu pour être occupé par ledit produit (11) après l'évacuation complète de l'excès d'air de ladite chambre de logement (15), et un deuxième tronçon (19b) positionné de manière contiguë audit premier tronçon (19a) et distal de ladite chambre de logement (15), ledit deuxième tronçon (19b) n'étant pas occupé par ledit produit (11) suite à la pression appliquée sur ladite chambre de logement (15) ;
- des moyens de fermeture complète (14) configurés pour agir dans une zone à cheval sur lesdits premier tronçon (19a) et deuxième tronçon (19b) de manière à toucher à la fois ledit premier tronçon (19a) et ledit deuxième tronçon (19b) pour le scellage permanent, en particulier par scellage hermétique, dudit passage (19) pour l'évacuation de l'excès d'air,
**caractérisé en ce que** les moyens (14) de fermeture partielle comprennent deux têtes de fermeture et de scellage (214) opposées à l'ouverture (17) formant les deux tronçons (19a, 19b) du passage (19) ; la portion inférieure de chaque tête de fermeture et de scellage (214), c'est-à-dire celle qui pousse sur le premier tronçon proximal (19a) comportant des poches internes (214s) pour permettre l'évacuation de l'air ou le confinement partiel du produit au cours de l'étape de fermeture partielle.

13. Appareil selon la revendication 12, dans lequel lesdits moyens (14) de fermeture partielle et/ou lesdits moyens (14) de fermeture complète comprennent des moyens (141, 142, 149, 214, 214a, 214b) pour joindre ou sceller, des premier et deuxième éléments opposés (141, 142 ou 146, 146, 147, 147 et 149, 149) de jonction ou de scellage, lesdits éléments opposés (141, 142 ou 146, 146, 147, 147 et 149, 149) étant mobiles, en particulier transversalement au passage respectif (17, 19), entre une position éloignée et une position rapprochée pour mettre en prise le récipient et une position rapprochée ou de scellage, des faces opposées, ou de parties de faces, du passage respectif (17, 19).

14. Appareil selon la revendication précédente, dans lequel au moins un des éléments de jonction ou de scellage correspondants comporte une surface (143) pour mettre en prise ledit récipient (13) et joindre ou sceller les faces opposées dudit passage (19) pour évacuer l'excès d'air, ladite surface de mise en prise (143) comportant une portion transversale (143a) conçue pour fermer ledit passage (19), à partir de la portion transversale (143a) se prolongeant, en particulier vers le logement intérieur (15) du récipient (13), des portions longitudinales correspondantes (143b) espacées, en particulier transversalement, les unes des autres.

15. Appareil selon la revendication précédente, dans lequel lesdites portions longitudinales (143b) de ladite surface de mise en prise (143) sont configurées de manière à définir, dans ledit passage (19) d'évacuation de l'excès d'air, des poches ou des espaces d'expansion correspondants pour le produit.
